# FASCICULE DE BREVET EUROPEEN

(11) **EP 3 898 420 B1**
(45) Date de publication et mention de la délivrance du brevet: **12.10.2022**
(21) Numéro de dépôt: 19845592.5
(22) Date de dépôt: 16.12.2019
(51) Int. Cl.: B64F 5/50, F01D 25/28, F02C 7/20

(54) **OUTILLAGE POUR PLACER UN ENSEMBLE PROPULSIF D'UNE POSITION HORIZONTALE À UNE POSITION VERTICALE**
WERKZEUG ZUR UMSTELLUNG EINER ANTRIEBSEINHEIT VON EINER WAAGERECHTEN POSITION AUF EINE SENKRECHTE POSITION
TOOL FOR MOVING A PROPELLING UNIT FROM A HORIZONTAL POSITION TO A VERTICAL POSITION

(30) Priorité: 21.12.2018 FR 1873728
(43) Date de publication de la demande: 27.10.2021
(73) Titulaire: SAFRAN AIRCRAFT ENGINES, 75015 Paris (FR)
(72) Inventeur: LEGALL, Remy, 77550 MOISSY-CRAMAYEL (FR)
(74) Mandataire: Gevers & Orès
(86) Numéro de dépôt international: PCT/FR2019/053076
(87) Numéro de publication internationale: WO 2020/128267

(56) Documents cités:
- EP-A1- 2 896 797
- WO-A1-2011/061307
- FR-A1- 2 389 768
- FR-A1- 2 990 190
- JP-B2- 3 716 070
- US-A- 5 383 652

## Description

### Domaine technique de l'invention

La présente invention se rapporte à une installation pour placer un ensemble propulsif d'une position horizontale à une position verticale, et plus particulièrement à un outillage de l'installation pour placer un ensemble propulsif d'une position horizontale à une position verticale.

### Arrière-plan technique

Un ensemble propulsif d'axe X comprend par exemple une turbomachine à double flux comportant, de l'avant vers l'arrière, en suivant le sens du flux d'air traversant la turbomachine, un module de soufflante et un générateur de gaz comprenant généralement un ou plusieurs étages de compresseur, basse pression et haute pression, une chambre de combustion, un ou plusieurs étages de turbine, haute pression puis basse pression.

Un module de soufflante comprend traditionnellement un rotor portant des pales et un carter avant entourant les pales. Le carter avant est plus communément appelé « carter de soufflante ». Le carter avant est bridé sur une virole externe d'un carter intermédiaire.

Pour retirer un ou plusieurs modules d'un ensemble propulsif, lors par exemple d'une opération de maintenance, il est nécessaire de mettre l'ensemble propulsif en position verticale (axe X vertical).

Lorsqu'un ensemble propulsif est déposé d'un aéronef, il est traditionnellement stocké dans un dispositif de stockage en position horizontale (axe X horizontal).

Ainsi, pour retirer un ou plusieurs modules d'un ensemble propulsif, l'ensemble propulsif doit être placé d'une position horizontale à une position verticale.

Pour placer un ensemble propulsif d'une position horizontale à une position verticale, il est connu d'utiliser notamment un outil avant lié à un système de levage et rapporté sur la virole externe du carter intermédiaire.

Un tel montage est compatible seulement avec un carter intermédiaire présentant des propriétés mécaniques suffisantes pour reprendre les efforts lors de la mise en position verticale de l'ensemble propulsif.

Les motoristes développent des carters intermédiaires présentant une structure optimisée afin d'accroître de manière générale les performances de l'ensemble propulsif. De tels carters intermédiaires sont par exemple réalisés en matériaux composites et/ou présentent un nombre réduit de bras structuraux. De tels carters intermédiaires présentent des propriétés mécaniques insuffisantes pour reprendre les efforts lors de la mise en position verticale de l'ensemble propulsif. US 5 383 652 A divulgue un outillage pour un ensemble propulsif.

La présente invention vise donc à proposer un outillage permettant de placer un ensemble propulsif d'une position horizontale à une position verticale quelles que soient les propriétés mécaniques du carter intermédiaire.

### Résumé de l'invention

L'invention propose à cet effet un outillage pour placer un ensemble propulsif d'une position horizontale à une position verticale, ledit ensemble propulsif étant défini par un premier axe X et comprenant au moins un module de soufflante à une extrémité avant dudit ensemble propulsif et un carter arrière à une extrémité arrière opposée à ladite extrémité avant, ledit module de soufflante comprenant un rotor portant des pales et un carter avant entourant lesdites pales, ledit outillage comprenant :
- un outil avant défini par un second axe A et comportant :
   - un premier ensemble comprenant un cadre configuré pour être positionné et maintenu par rapport audit carter avant dudit module de soufflante, ledit cadre comprenant une première interface de liaison configurée pour être liée avec des premiers moyens d'attache d'un premier système de levage de sorte que ledit cadre soit mobile en rotation autour d'un axe de rotation R par rapport auxdits premiers moyens d'attache ;
   - un second ensemble comprenant un arbre configuré pour être positionné et maintenu par rapport audit rotor dudit module de soufflante ;
   - un organe de liaison entre ledit premier ensemble et ledit second ensemble, ledit organe de liaison étant configuré pour être d'une part positionné et maintenu par rapport audit premier ensemble, et d'autre part positionné et maintenu par rapport audit second ensemble ;
- un outil arrière défini par un troisième axe B et configuré pour être positionné et maintenu par rapport audit carter arrière, ledit outil arrière comprenant une seconde interface de liaison configurée pour être liée avec des seconds moyens d'attache d'un second système de levage.

Un tel outillage permet à l'ensemble propulsif de reprendre les efforts de manière optimale, et notamment les efforts engendrés par le poids de l'ensemble propulsif. En effet, les efforts sont repris à l'avant par le module de soufflante rigidifié (par l'intermédiaire de l'outil avant) et à l'arrière par le carter arrière. L'outil avant permet de rigidifier le module de soufflante en immobilisant le rotor par rapport au carter avant. Ainsi, à l'avant, les efforts sont repris par le module de soufflante rigidifié, et notamment par le carter avant et par le rotor. Une telle répartition des efforts permet de minimiser les déformations lors du placement de l'ensemble propulsif en position verticale, et ainsi d'éviter toute dégradation.

L'outillage selon l'invention peut comprendre une ou plusieurs des caractéristiques suivantes, prises isolément les unes des autres ou en combinaison les unes avec les autres :
- le premier ensemble comprend deux tourillons opposés et alignés selon ledit axe de rotation R, lesdits deux tourillons définissant ladite première interface de liaison, chaque tourillon étant configuré pour être lié auxdits premiers moyens d'attache dudit premier système de levage ;
- ledit arbre est configuré pour être logé au moins en partie dans un logement interne dudit rotor, ledit second ensemble comprenant :
   - une première surface de centrage avant dudit arbre configurée pour s'insérer dans un premier alésage avant dudit logement ;
   - une seconde surface de centrage arrière dudit arbre configurée pour s'insérer dans un second alésage arrière dudit logement ;
   - une première surface d'appui avant dudit arbre configurée pour venir en appui axial avec une première face arrière d'une butée dudit logement ;
   - une seconde surface d'appui arrière d'une bague rapportée sur ledit arbre, ladite seconde surface d'appui étant configurée pour venir en appui axial avec une seconde face avant dudit rotor ;
   - un premier écrou rapporté sur ledit arbre, ledit premier écrou comprenant une portion taraudée coopérant avec une première portion filetée dudit arbre de sorte que le serrage dudit premier écrou maintienne le contact non seulement entre ladite première surface d'appui et ladite première face mais également entre ladite seconde surface d'appui et ladite seconde face ;
- la première surface d'appui est définie par au moins deux facettes coplanaires, lesdites facettes étant perpendiculaires au second axe A et espacées circonférentiellement, chacune desdites facettes étant formée sur une dent en saillie radiale depuis ledit arbre, lesdites dents étant aptes à traverser axialement ladite butée via des ouvertures de forme complémentaire pratiquées dans ladite butée ;
- l'espace circonférentiel entre lesdites au moins deux facettes défini un passage axial, ladite bague comprenant une languette en saillie axiale configurée pour traverser simultanément une des ouvertures et ledit passage de sorte à lier en rotation l'arbre avec ledit rotor et garantir le contact entre ladite première surface d'appui et ladite première face ;
- ladite première surface de centrage avant est configurée pour s'insérer dans ledit premier alésage avant pratiqué dans ladite butée ;
- le premier ensemble comprend :
   - un troisième alésage borgne dudit cadre configuré pour recevoir une troisième surface de centrage d'une collerette dudit carter avant ;
   - une troisième surface d'appui arrière dudit cadre configurée pour venir en appui axial avec une troisième face avant de ladite collerette dudit carter avant ;
   - au moins un premier élément de maintien configuré pour maintenir de façon réversible ladite collerette audit cadre lorsque ledit troisième alésage reçoit ladite troisième surface de centrage et ladite troisième surface d'appui est en appui avec ladite troisième face ;
- ledit organe de liaison comprend :
   - une quatrième surface de centrage insérée dans un quatrième alésage dudit cadre ;
   - une quatrième surface d'appui arrière en appui axial avec une quatrième face avant dudit cadre ;
   - au moins un second élément de maintien configuré pour maintenir de façon réversible ledit organe de liaison audit cadre lorsque ladite quatrième surface de centrage est insérée dans ledit quatrième alésage et ladite quatrième surface d'appui est en appui avec ladite quatrième face ;
- ledit second ensemble comprend une cinquième surface de centrage dudit arbre placée en avant dudit premier écrou, ladite cinquième surface de centrage étant insérée dans un cinquième alésage dudit organe de liaison, ledit second ensemble comprenant un second écrou rapporté sur ledit arbre, ledit second écrou comprenant une portion taraudée coopérant avec une seconde portion filetée dudit arbre de sorte que le serrage dudit second écrou maintienne ledit second ensemble par rapport audit premier ensemble ;
- le second ensemble comprend un contre-écrou placé entre ledit premier écrou et ledit organe de liaison, ledit contre-écrou comprenant une portion taraudée coopérant avec ladite première portion filetée dudit arbre.

L'invention a pour deuxième objet une installation pour placer un ensemble propulsif défini par un premier axe X d'une position horizontale à une position verticale, ladite installation comprenant :
- un outillage tel que décrit précédemment ;
- un premier système de levage comprenant des premiers moyens d'attache audit premier ensemble, ledit premier système de levage étant configuré pour déplacer horizontalement lesdits premiers moyens d'attache suivant un axe longitudinal L et déplacer verticalement lesdits premiers moyens d'attache, ledit axe longitudinal L étant parallèle au premier axe X de l'ensemble propulsif lorsqu'il est en position horizontale ;
- un second système de levage comprenant des seconds moyens d'attache audit outil arrière, ledit second système de levage étant configuré pour déplacer horizontalement lesdits seconds moyens d'attache suivant ledit axe longitudinal L et déplacer verticalement lesdits seconds moyens d'attache.

L'invention a pour troisième objet un procédé de montage de l'outillage d'une installation telle que décrite précédemment sur un ensemble propulsif défini par un premier axe X et comprenant au moins un module de soufflante à une extrémité avant dudit ensemble propulsif et un carter arrière à une extrémité arrière opposée à ladite extrémité avant, ledit module de soufflante comprenant un rotor portant des pales et un carter avant entourant lesdites pales, ledit procédé de montage comprenant les étapes suivantes :
- une étape de montage de l'outil avant sur ledit module de soufflante de sorte que ledit axe de rotation R soit sensiblement horizontal ;
- une étape de montage de l'outil arrière sur ledit carter arrière.

L'étape de montage de l'outil avant peut comprendre les sous-étapes suivantes :
- une sous-étape de liaison des premiers moyens d'attache dudit premier système de levage à ladite première interface de liaison dudit cadre ;
- une sous-étape de mise en position et maintien en position du cadre par rapport audit carter avant dudit module de soufflante ;
- une sous-étape de mise en position et maintien en position dudit arbre par rapport audit rotor dudit module de soufflante ;
- une sous-étape de mise en position dudit organe de liaison par rapport auxdits premier et second ensembles ;
- une sous-étape de maintien en position dudit organe de liaison par rapport audit premier ensemble ;
- une sous-étape de maintien en position dudit organe de liaison rapport audit second ensemble.

L'étape de montage de l'outil arrière peut comprendre les sous-étapes suivantes;
- une sous-étape de liaison des seconds moyens d'attache dudit second système de levage à ladite seconde interface de liaison dudit outil arrière ;
- une sous-étape de mise en position et maintien en position dudit outil arrière par rapport audit carter arrière.

L'invention a pour quatrième objet un procédé de placement d'un ensemble propulsif d'une position horizontale à une position verticale au moyen d'une installation telle que décrite précédemment, ledit outillage de ladite installation étant monté sur ledit ensemble propulsif tel que décrit précédemment, ledit ensemble propulsif étant disposé dans un dispositif de stockage en position horizontale, lesdits premiers et seconds moyens d'attache étant respectivement liés auxdits première et seconde interfaces de liaison, ledit procédé de placement comprenant les étapes suivantes :
- une étape de dépose de l'ensemble propulsif de sorte que ledit ensemble propulsif soit uniquement supporté par lesdits outils avant et arrière ;
- une étape de manœuvre desdits premier et second systèmes de levage de manière à faire basculer l'ensemble propulsif autour de l'axe de rotation R de sorte à abaisser ledit outil avant et élever ledit outil arrière;
- une étape de pose de l'ensemble propulsif en position verticale sur des moyens d'appui au sol dudit outil avant de sorte que ledit premier axe X dudit ensemble propulsif soit vertical.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue en perspective d'une installation selon l'invention ;
[Fig.2] la figure 2 est une vue éclatée en perspective d'un outil avant d'un outillage de l'installation ;
[Fig.3] la figure 3 est une vue de détail en coupe axiale illustrant le montage de l'outil avant sur un carter avant d'un module de soufflante d'un ensemble propulsif d'axe X ;
[Fig.4] la figure 4 est une vue de détail en coupe axiale selon le plan P illustrant le montage de l'outil avant sur un rotor du module de soufflante, le plan P passant à la fois par l'axe X et par une languette d'une bague de l'outil avant comme illustré en figure 1 ;
[Fig.5] la figure 5 est une vue de détail en coupe axiale selon un plan P' illustrant le montage de l'outil avant sur un rotor du module de soufflante, le plan P' passant à la fois par l'axe X et par une dent d'un arbre de l'outil avant comme illustré en figure 1 ;
[Fig.6] la figure 6 est une vue de côté schématique illustrant le montage d'un premier ensemble de l'outil avant sur l'ensemble propulsif ;
[Fig.7] la figure 7 est une vue en perspective illustrant le montage d'un second ensemble de l'outil avant sur l'ensemble propulsif ;
[Fig.8] la figure 8 est une vue en perspective illustrant le montage du second ensemble de l'outil avant sur l'ensemble propulsif ;
[Fig.9] la figure 9 est une vue en perspective illustrant le montage du second ensemble de l'outil avant sur l'ensemble propulsif ;
[Fig.10] la figure 10 est une vue de côté schématique illustrant une première étape d'un procédé de placement d'un ensemble propulsif d'une position horizontale à une position verticale au moyen de l'installation ;
[Fig.11] la figure 11 est une vue de côté schématique illustrant une seconde étape du procédé de placement d'un ensemble propulsif d'une position horizontale à une position verticale au moyen de l'installation ;
[Fig.12] la figure 12 est une vue de côté schématique illustrant une troisième étape du procédé de placement d'un ensemble propulsif d'une position horizontale à une position verticale au moyen de l'installation.

### Description détaillée

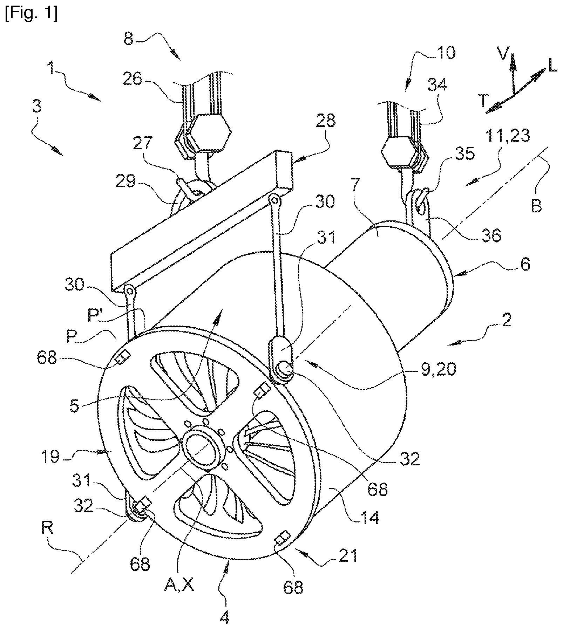

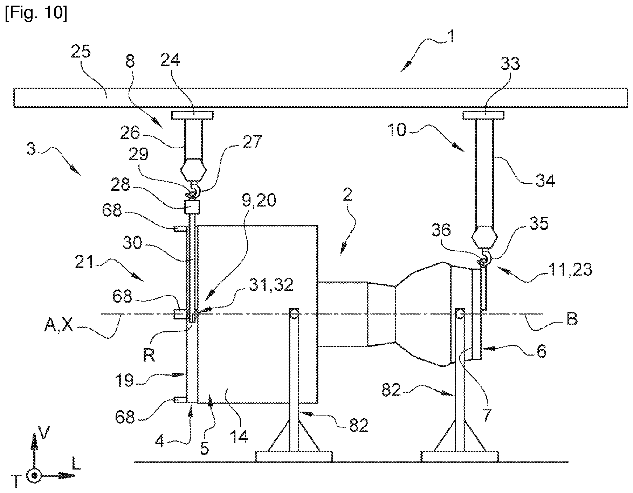

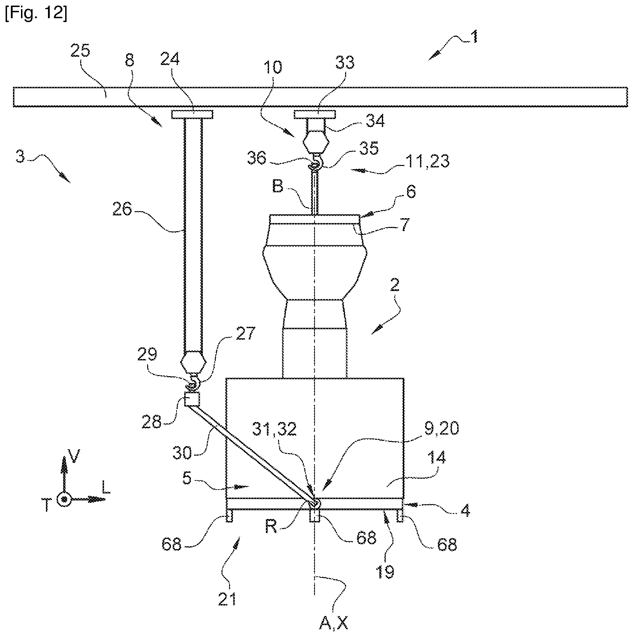

Sur la figure 1 est représentée une installation 1 pour placer un ensemble propulsif 2 d'axe X (ou premier axe X) d'une position horizontale (axe X horizontal) (figure 10) à une position verticale (axe X vertical) (figure 12).

On définit par rapport à l'installation 1 un repère orthogonal L, T, V comprenant trois axes perpendiculaires deux à deux, à savoir :
- un axe L, définissant une direction longitudinale, horizontale, parallèle avec l'axe X de l'ensemble propulsif 2 lorsqu'il est en position horizontale,
- un axe T, définissant une direction transversale, horizontale, qui avec l'axe X définit un plan XY horizontal parallèle au sol sur lequel repose l'installation 1,
- un axe V, définissant une direction verticale, perpendiculaire au plan XY horizontal.

L'installation 1 comprend un outillage 3 comportant un outil avant 4 configuré pour être monté sur un module de soufflante 5 de l'ensemble propulsif 2 et un outil arrière 6 configuré pour être monté sur un carter arrière 7 de l'ensemble propulsif 2.

L'installation 1 comprend également un premier système de levage 8 comprenant des premiers moyens d'attache 9 à l'outil avant 4. Le premier système de levage 8 est configuré pour déplacer horizontalement les premiers moyens d'attache 9 suivant l'axe longitudinal L et déplacer verticalement les premiers moyens d'attache 9.

L'installation 1 comprend en outre un second système de levage 10 comprenant des seconds moyens d'attache 11 à l'outil arrière 6. Le second système de levage 10 est configuré pour déplacer horizontalement les seconds moyens d'attache 11 suivant l'axe longitudinal L et déplacer verticalement les seconds moyens d'attache 11.

L'ensemble propulsif 2 comprend au moins un module de soufflante 5 à une extrémité avant de l'ensemble propulsif 2 et un carter arrière 7 à une extrémité arrière opposée à l'extrémité avant. Le module de soufflante 5 comprend un rotor 12 (ou arbre) portant des pales 13 et un carter avant 14 (plus communément appelé carter de soufflante) entourant les pales 13.

Selon le mode de réalisation illustré sur les figures, l'ensemble propulsif 2 comprend une turbomachine à double flux comportant, de l'avant vers l'arrière, et dans le sens du flux d'air traversant ladite turbomachine, un module de soufflante 5 et un générateur de gaz comprenant traditionnellement un ou plusieurs étages de compresseur, basse pression et haute pression, une chambre de combustion, un ou plusieurs étages de turbine, haute pression puis basse pression.

Le module de soufflante 5 comprend une pluralité d'aubes comportant chacune une pale 13 à profil aérodynamique délimitée radialement par une extrémité externe libre en regard du carter avant 14 et un pied fixé à un disque lié en rotation au rotor 12. Le rotor 12 est guidé en rotation via deux paliers à roulement 15 espacés axialement l'un de l'autre. Le carter avant 14 est bridé sur une virole externe d'un carter intermédiaire.

Selon le mode de réalisation illustré sur les figures, le carter arrière 7 est le carter externe de la turbine basse pression. En variante, le carter arrière 7 pourrait être un carter central de turbine plus connu sous l'acronyme anglais TCF pour « Turbine Center Frame » dans le cas où la turbine basse pression aurait été retirée lorsque l'ensemble propulsif 2 se trouve en position horizontale. Le carter central de turbine se trouve à la liaison entre la turbine haute pression et la turbine basse pression.

L'outil avant 4 d'axe A (ou second axe A) comprend un premier ensemble 16, un second ensemble 17 et un organe de liaison 18 entre le premier ensemble 16 et le second ensemble 17. Lorsque l'outil avant 4 est monté sur l'ensemble propulsif 2, l'axe A de l'outil avant 4 est coaxial avec l'axe X de l'ensemble propulsif 2.

Le premier ensemble 16 de l'outil avant 4 comprend un cadre 19 configuré pour être positionné et maintenu par rapport au carter avant 14 du module de soufflante 5. Le cadre 19 comprend également une première interface de liaison 20 configurée pour être liée avec les premiers moyens d'attache 9 du premier système de levage 8 de sorte que le cadre 19 soit mobile en rotation autour d'un axe de rotation R par rapport aux premiers moyens d'attache 9.

Le second ensemble 17 comprend un arbre 22 configuré pour être positionné et maintenu par rapport au rotor 12 du module de soufflante 5.

L'organe de liaison 18 est configuré pour être d'une part positionné et maintenu par rapport au premier ensemble 16, et d'autre part positionné et maintenu par rapport au second ensemble 17.

L'outil arrière 6 d'axe B (ou troisième axe B) est configuré pour être positionné et maintenu par rapport au carter arrière 7, l'outil arrière 6 comprenant une seconde interface de liaison 23 configurée pour être liée avec les seconds moyens d'attache 11 du second système de levage 10. Lorsque l'outil arrière 6 est monté sur l'ensemble propulsif 2, l'axe B de l'outil arrière 6 est coaxial avec l'axe X de l'ensemble propulsif 2.

Par convention dans la présente demande, on entend par « axial » ou « axialement » toute direction parallèle à l'axe X (respectivement aux axes A et B), et par « radial » ou « radialement » toute direction perpendiculaire à l'axe X (respectivement aux axes A et B). De même, par convention dans la présente demande, les termes « interne », « externe », « intérieur » ou « extérieur » sont définis radialement par rapport à l'axe X (respectivement aux axes A et B). Enfin, les termes « avant » et « arrière » sont définis axialement par rapport à l'axe X lorsque l'ensemble propulsif 2 est en position horizontale (figure 10), le module de soufflante 5 se trouvant alors à une extrémité avant de l'ensemble propulsif 2 et le carter arrière 7 à une extrémité arrière opposée à l'extrémité avant.

Selon le mode de réalisation illustré sur les figures et notamment les figures 1 et 10 à 12, le premier système de levage 8 comprend un premier dispositif de levage 24 tel qu'un treuil, un équilibreur de charge ou un palan. Le premier dispositif de levage 24 est mobile en translation longitudinale (suivant l'axe L) sur une poutre 25 soutenue par une ossature porteuse. Le premier dispositif de levage 24 comprend de plus un câble 26 enroulable (respectivement déroulable) muni d'un premier crochet de levage 27. Le premier système de levage 8 comprend en outre un palonnier 28 monopoutre disposé transversalement (suivant l'axe T) comprenant un premier anneau de levage 29 central dans lequel est engagé le premier crochet de levage 27. Le premier système de levage 8 comprend également deux élingues 30, chaque élingue 30 (monobrin) étant liée à une extrémité au palonnier 28 et présentant une patte d'attache 31 à une extrémité opposée, la patte d'attache 31 comprenant un orifice dans lequel est logé un tourillon 32 de la première interface de liaison 20 lorsque le cadre 19 est lié au premier système de levage 8. Les deux pattes d'attache 31 définissent les premiers moyens d'attache 9. Les deux tourillons 32 définissent la première interface de liaison 20.

Avantageusement, la distance entre les tourillons 32 est sensiblement égale à la distance entre les deux élingues 30 au niveau du palonnier 28.

De la même manière que le premier système de levage 8, le second système de levage 10 comprend un second dispositif de levage 33 tel qu'un treuil, un équilibreur de charge, un palan. Le second dispositif de levage 33 est mobile en translation longitudinale (suivant l'axe L) sur la poutre 25. Le second dispositif de levage 33 comprend un câble 34 enroulable (respectivement déroulable) muni d'un second crochet de levage 35. Le second crochet de levage 35 est engagé dans un second anneau de levage 36 de l'outil arrière 6 lorsque l'outil arrière 6 est lié au second système de levage 10. Le second crochet de levage 35 définit les seconds moyens d'attache 11. Le second anneau de levage 36 définit la seconde interface de liaison 23.

En variante, de la même manière que le premier système de levage 8, les seconds moyens d'attache 11 pourraient être deux pattes d'attache d'élingues liées à un palonnier lui-même connecté avec le second dispositif de levage, la seconde interface de liaison 23 serait alors définie par deux tourillons de l'outil arrière.

Selon le mode de réalisation illustré sur les figures, lorsque l'outil avant 4 est monté sur l'ensemble propulsif 2, l'arbre 22 est logé en partie dans un logement 37 interne du rotor 12.

L'arbre 22 comprend une première surface de centrage 38 avant (centrée sur l'axe A) configurée pour s'insérer dans un premier alésage 39 avant du logement 37 du rotor 12. L'arbre 22 comprend également une seconde surface de centrage 40 arrière (centrée sur l'axe A) configurée pour s'insérer dans un second alésage 41 arrière du logement 37. L'arbre 22 comprend en outre une première surface d'appui 42 avant (perpendiculaire à l'axe A) configurée pour venir en appui axial avec une première face 43 arrière d'une butée 44 du logement 37. Le second ensemble 17 comprend une bague 45 rapportée sur l'arbre 22, la bague 45 présentant une seconde surface d'appui 46 arrière (perpendiculaire à l'axe A) configurée pour venir en appui axial avec une seconde face 47 avant du rotor 12. Le second ensemble 17 comprend en outre un premier écrou 48 rapporté sur l'arbre 22, le premier écrou 48 comprenant une portion taraudée coopérant avec une première portion filetée 49 de l'arbre 22 de sorte que le serrage du premier écrou 48 maintienne le contact non seulement entre la première surface d'appui 42 et la première face 43 mais également entre la seconde surface d'appui 46 et la seconde face 47.

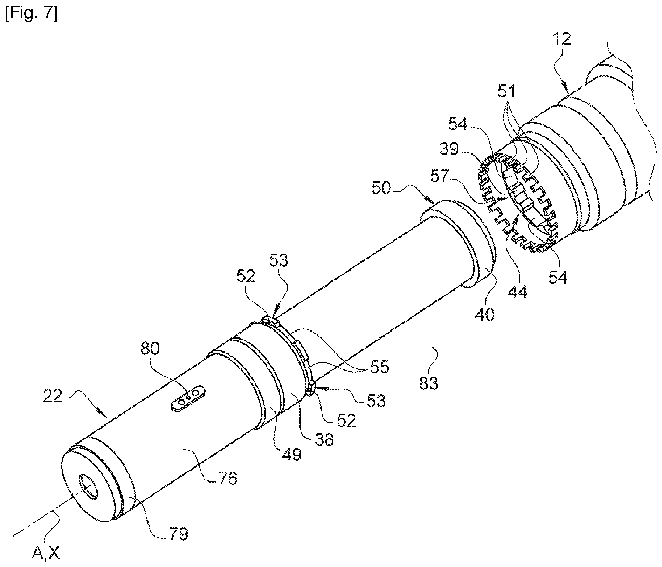

Plus précisément, l'arbre 22 est tubulaire. L'arbre 22 présente, de l'avant vers l'arrière, la première portion filetée 49, la première surface de centrage 38, la première surface d'appui 42 et la seconde surface de centrage 40. La seconde surface de centrage 40 est définie par la surface externe d'un collier de protection 50 rapporté sur l'arbre 22. Les première et seconde surfaces de centrage 38, 40 sont cylindriques. La seconde face 47 est définie par des dents 51 axiales d'un crabot du rotor 12 (figures 7 à 9).

Tel qu'illustré sur les figures et notamment la figure 7, la première surface d'appui 42 est définie par six facettes 52 avant coplanaires présentant des caractéristiques dimensionnelles égales. Les facettes 52 sont perpendiculaires à l'axe A et espacées circonférentiellement autour de l'axe A de manière régulière. Chacune des facettes 52 est formée sur une dent 53 en saillie radiale depuis l'arbre 22. Les dents 53 sont aptes à traverser axialement la butée 44 du logement 37 via des ouvertures 54 de forme complémentaire pratiquées dans la butée 44. En section transversale, chaque ouverture 54 présente un profil extérieur équivalent à celui d'une dent 53.

Plus précisément, les dents 53 présentent des flancs parallèles. Chaque dent 53 s'étend axialement selon l'axe A depuis la facette 52.

L'espace circonférentiel entre deux facettes 52 adjacentes défini un passage 55 axial. La bague 45 du second ensemble 17 comprend une languette 56 en saillie axiale configurée pour traverser simultanément une des ouvertures 54 et un passage 55 de sorte à lier en rotation l'arbre 22 avec le rotor 12 et garantir le contact entre la première surface d'appui 42 et la première face 43.

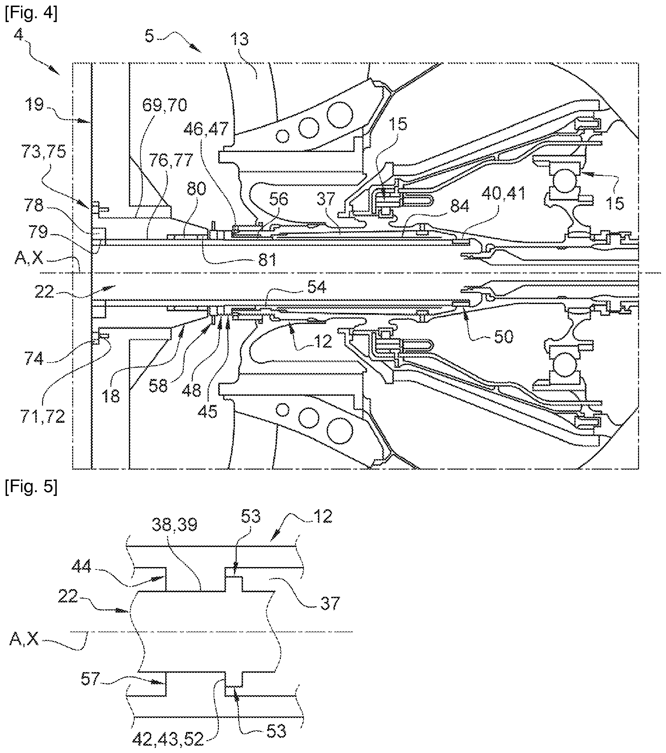

Tel qu'illustré sur la figure 5, le premier alésage 39 avant est pratiqué dans la butée 44. Autrement dit, le premier alésage 39 est défini par les six parois internes des protubérances 57 de la butée 44, chaque protubérance 57 étant située entre deux ouvertures 54 adjacentes de la butée 44.

Tel qu'illustré sur les figures, le second ensemble 17 comprend en outre un contre-écrou 58 placé axialement entre le premier écrou 48 et l'organe de liaison 18, le contre-écrou 58 comprenant une portion taraudée coopérant avec la première portion filetée 49 de l'arbre 22.

Avantageusement, la première interface de liaison 20 du cadre 19 est placée à une périphérie du cadre 19 de sorte que la première interface de liaison 20 soit située à l'extérieur du carter avant 14.

Avantageusement, le premier ensemble 16 comprend des moyens d'appui au sol 21.

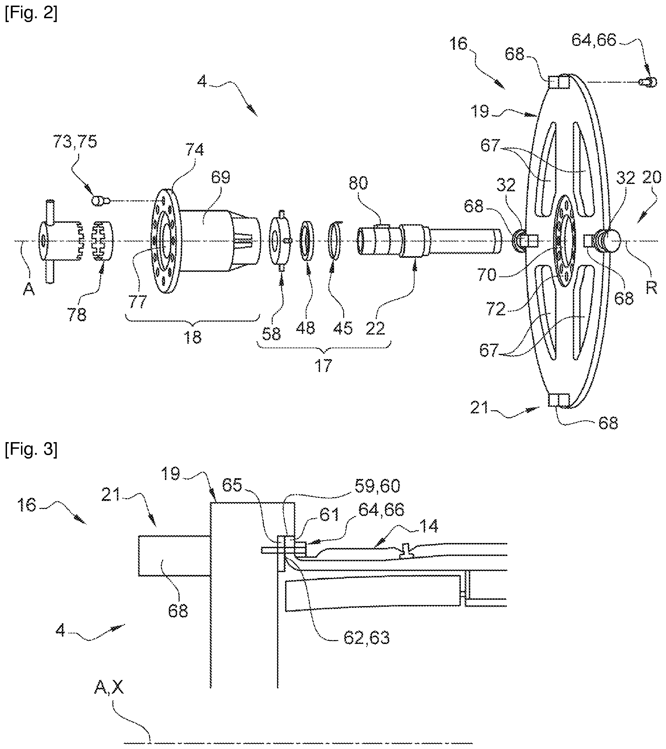

Selon le mode de réalisation illustré sur les figures et notamment la figure 3, le cadre 19 comprend un troisième alésage 59 borgne (centré sur l'axe A) configuré pour recevoir une troisième surface de centrage 60 d'une collerette 61 du carter avant 14. Le cadre 19 comprend en outre une troisième surface d'appui 62 arrière (perpendiculaire à l'axe A) configurée pour venir en appui axial avec une troisième face 63 avant de la collerette 61 du carter avant 14. Le premier ensemble 16 comprend une pluralité de premiers éléments de maintien 64 répartis régulièrement autour de l'axe A et configurés pour maintenir de façon réversible la collerette 61 au cadre 19 lorsque le troisième alésage 59 reçoit la troisième surface de centrage 60 et la troisième surface d'appui 62 est en appui avec la troisième face 63.

Plus précisément, le cadre 19 est globalement de forme circulaire. La troisième surface d'appui 62 est définie par la surface arrière d'une rondelle de protection 65 rapportée sur le cadre 19. Les premiers éléments de maintien 64 sont des vis 66 réparties régulièrement autour de l'axe A. Le cadre 19 comprend des jours 67 afin de minimiser sa masse. Les moyens d'appui au sol 21 sont opposés aux troisièmes surfaces de centrage et d'appui 60, 62. Les moyens d'appui au sol 21 sont définis par quatre pieds 68 s'étendant axialement selon l'axe A et repartis régulièrement autour de l'axe A.

Le cadre 19 comprend deux tourillons 32 diamétralement opposés et alignés selon l'axe de rotation R. Les deux tourillons 32 définissent la première interface de liaison 20. Chaque tourillon 32 est configuré pour s'insérer dans un orifice d'une patte 31 d'une élingue 30 du premier système de levage 8. Les tourillons 32 sont rapportés à la périphérie du cadre 19 de sorte que les tourillons 32 soient situés à l'extérieur du carter avant 14 lorsque le cadre 19 est monté sur l'ensemble propulsif 2. Un tel positionnement des tourillons 32 permet d'éviter tout contact entre les élingues 30 et l'ensemble propulsif 2 lors de sa mise en position verticale.

Selon le mode de réalisation illustré sur les figures et notamment la figure 4, l'organe de liaison 18 comprend une quatrième surface de centrage 69 (centrée sur l'axe A) insérée dans un quatrième alésage 70 du cadre 19 (position montée). L'organe de liaison 18 comprend également une quatrième surface d'appui 71 arrière (perpendiculaire à l'axe A) en appui axial avec une quatrième face 72 avant du cadre 19 (position montée). L'organe de liaison 18 comprend en outre une pluralité de seconds éléments de maintien 73 répartis régulièrement autour de l'axe A et configurés pour maintenir de façon réversible l'organe de liaison 18 au cadre 19 lorsque la quatrième surface de centrage 69 est insérée dans le quatrième alésage 70 et la quatrième surface d'appui 71 est en appui avec la quatrième face 72.

Plus précisément, l'organe de liaison 18 est une pièce de révolution autour de l'axe A. La quatrième surface de centrage 69 est cylindrique. La quatrième surface d'appui 71 est définie par la surface arrière d'un collet 74 avant de l'organe de liaison 18 (position montée). La quatrième face 72 est définie par un épaulement d'un évidement cylindrique (centré sur l'axe A) formé depuis le devant du cadre 19. Les seconds éléments de maintien 73 sont des vis 75 réparties régulièrement autour de l'axe A.

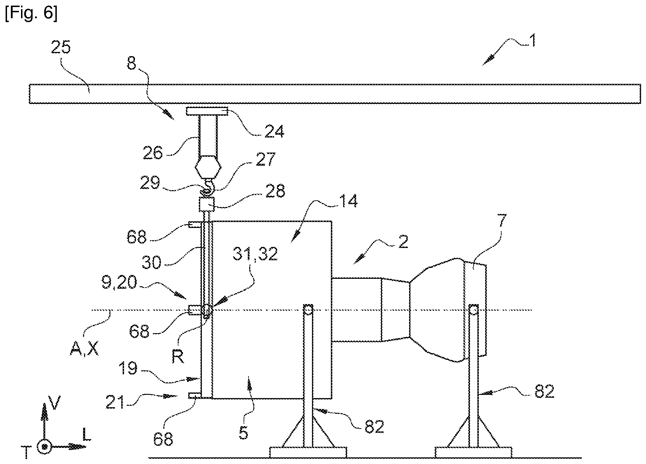

Selon le mode de réalisation illustré sur les figures et notamment les figures 4 et 6, l'arbre 22 comprend une cinquième surface de centrage 76 placée en avant du premier écrou 48, la cinquième surface de centrage 76 (centrée sur l'axe A) étant insérée dans un cinquième alésage 77 de l'organe de liaison 18. Le second ensemble 17 comprend un second écrou 78 rapporté sur l'arbre 22. Le second écrou 78 comprenant une portion taraudée coopérant avec une seconde portion filetée 79 de l'arbre 22 de sorte que le serrage du second écrou 78 maintienne le second ensemble 17 par rapport au premier ensemble 16.

Plus précisément, la cinquième surface de centrage 76 est cylindrique. Le second écrou 78 est en appui axial contre un épaulement d'un lamage formé depuis le devant de l'organe de liaison 18. La seconde portion filetée 79 est placée en avant de la cinquième de surface de centrage 76 qui est elle-même placée en avant de la première portion filetée 49 de l'arbre 22.

Selon le mode de réalisation illustré sur les figures, l'outil avant 4 comprend des moyens de liaison en rotation du second ensemble 17 avec l'organe de liaison 18.

Plus précisément, les moyens de liaison sont définis par une clavette 80 logée en partie dans l'arbre 22 et en partie dans une rainure 81 axiale de l'organe de liaison 18, la rainure 81 débouchant au moins à l'arrière de l'organe de liaison 18.

Le montage d'un outillage 3 d'une installation 1 sur un ensemble propulsif 2 d'axe X comprenant au moins un module de soufflante 5 à une extrémité avant de l'ensemble propulsif 2 et un carter arrière 7 à une extrémité arrière opposée à l'extrémité avant, le module de soufflante 5 comprenant un rotor 12 portant des pales 13 et un carter avant 14 entourant les pales 13, est réalisé selon procédé de montage comprenant au moins les étapes suivantes :
- une étape de montage de l'outil avant 4 sur le module de soufflante 5 de sorte que l'axe de rotation R soit sensiblement horizontal ;
- une étape de montage de l'outil arrière 6 sur le carter arrière 7.

L'outil avant 4 peut être monté avant l'outil arrière 6, ou inversement. Lors du montage des outils avant et arrière l'ensemble propulsif 2 est disposé dans un dispositif de stockage 82 (ou berceau de stockage) en position horizontale (figure 6).

L'étape de montage de l'outil avant 4 comprend les sous-étapes suivantes :
- une première sous-étape de liaison des premiers moyens d'attache 9 du premier système de levage 8 à la première interface de liaison 20 du cadre 19 ;
- une seconde sous-étape de mise en position et maintien en position du cadre 19 par rapport au carter avant 14 du module de soufflante 5 ;
- une troisième sous-étape de mise en position et maintien en position de l'arbre 22 par rapport au rotor 12 du module de soufflante 5 ;
- une quatrième sous-étape de mise en position de l'organe de liaison 18 par rapport aux premier et second ensembles 16, 17 ;
- une cinquième sous-étape de maintien en position de l'organe de liaison 18 par rapport au premier ensemble 16 ;
- une sixième sous-étape de maintien en position de l'organe de liaison 18 rapport au second ensemble 17.

Selon le mode de réalisation illustré sur les figures, lors de la première sous-étape, le premier ensemble 16 se trouve par exemple stocké dans un rack de rangement, un opérateur insère chaque tourillon 32 du cadre 19 dans l'orifice de la patte d'attache 31 correspondante du premier système de levage 8 de sorte que le cadre 19 soit mobile en rotation autour de l'axe de rotation R par rapport aux pattes d'attache 31.

Lors de la seconde sous-étape, tel qu'illustré sur la figure 6, le cadre 19 est déplacé depuis le rack de rangement jusqu'au module de soufflante 5 de l'ensemble propulsif 2 en actionnant le premier dispositif de levage 24. Le cadre 19 est ensuite mis en position par rapport au carter avant 14 via l'insertion de la troisième surface de centrage 60 de la collerette 61 dans le troisième alésage 59 du cadre 19 et la mise en appui de la surface arrière de la rondelle de protection 65 (troisième surface d'appui 62) contre la troisième face 63 de la collerette 61. Le cadre 19 est positionné angulairement autour de l'axe A de sorte que l'axe de rotation R soit sensiblement horizontal. Le cadre 19 est enfin maintenu en position par rapport au carter avant 14 via le vissage des vis 66 (premiers éléments de maintien 64).

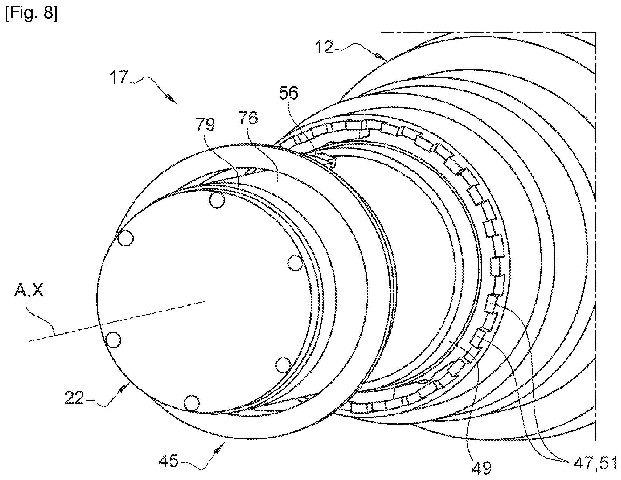

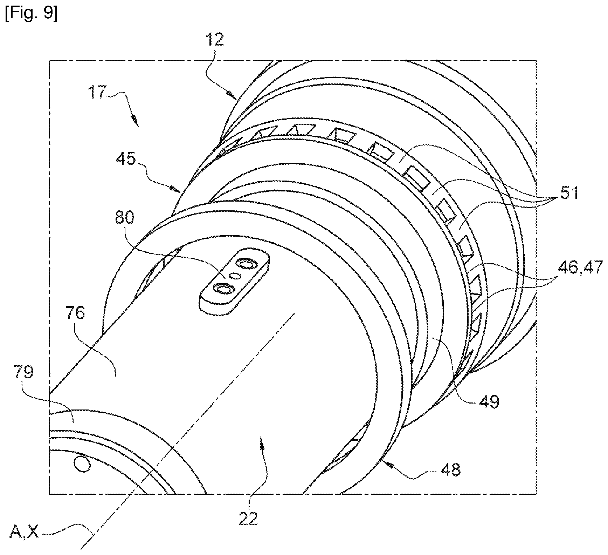

Lors de la troisième sous-étape, l'arbre 22 est inséré axialement dans le logement 37 du rotor 12 dans le sens indiqué par la flèche 83 sur la figure 6 tout en alignant les dents 53 de l'arbre 22 avec les ouvertures 54 de la butée 44 de sorte les dents 53 puissent traverser axialement la butée 44. L'arbre 22 est ensuite mis en position (verticalement et transversalement) par rapport au rotor 12 via l'insertion de la surface externe du collier de protection 50 (seconde surface de centrage 40) dans le second alésage 41 du logement 37 et l'insertion de la première surface de centrage 38 dans le premier alésage 39 de la butée 44, les dents 53 se trouvant alors en arrière de la butée 44. Puis, l'arbre 22 est mis en position (longitudinalement) via la rotation manuelle de l'arbre 22 autour de l'axe A de sorte à superposer les dents 53 de l'arbre 22 avec les protubérances 57 de la butée 44 (figure 5), ce positionnement angulaire de l'arbre 22 étant arrêté par l'introduction simultanée de la languette 56 de la bague 45 rapportée sur l'arbre 22 dans une ouverture 54 de la butée 44 et un passage 55 de l'arbre 22 défini entre deux dents 53 adjacentes (figure 8). La bague 45 est arrêtée axialement par l'appui axial de sa seconde surface d'appui 46 contre les dents 51 du crabot du rotor 12 (seconde face 47) (figure 9). La languette 56 permet de lier en rotation l'arbre 22 avec le rotor 12 et garantir le contact entre la première surface d'appui 42 de l'arbre 22 et la première face 43 de la butée 44. L'arbre 22 est maintenu en position par le vissage du premier écrou 48 rapporté sur la première portion filetée 49 de l'arbre 22 (figure 9). A l'issue du vissage, le premier écrou 48 est en appui axial contre la bague 45, la seconde surface d'appui 46 de la bague 45 est en appui axial contre les dents 51 du crabot et les facettes 52 des dents 53 de l'arbre 22 (première surface d'appui 42) sont en appui axial contre la première face 43 de la butée 44. Le contre-écrou 58 est monté sur la première portion filetée 49 sans être serré. Avant l'insertion de l'arbre 22 dans le logement 37, un fourreau de protection 84 peut être placé dans le logement 37, le fourreau de protection 84 s'étendant avantageusement à partir de la butée 44 du logement 37 jusqu'au second alésage 41.

Lors de la quatrième sous-étape, l'organe de liaison 18 est mis en position (transversalement et verticalement) par rapport aux premier et second ensembles 16, 17 via l'insertion de la cinquième surface de centrage 76 de l'arbre 22 dans le cinquième alésage 77 de l'organe de liaison 18 et l'insertion de la quatrième surface de centrage 69 de l'organe de liaison 18 dans le quatrième alésage 70 du cadre 19. Puis l'organe de liaison 18 est mis en position (longitudinalement) via l'insertion de la clavette 80, préalablement positionnée, dans sa rainure 81 et la mise en appui de sa quatrième surface d'appui 71 contre l'épaulement de l'évidement du cadre 19 (quatrième face 72).

Lors de la cinquième sous-étape, l'organe de liaison 18 est maintenu en position par rapport au cadre 19 via le vissage des vis 75 (seconds éléments de maintien 73).

Lors de la sixième sous-étape, l'organe de liaison 18 est maintenu en position par rapport à l'arbre 22 par le vissage du second écrou 78 sur la seconde portion filetée 79 de l'arbre 22. A l'issue du vissage, le second écrou 78 est en appui axial contre l'épaulement du lamage de l'organe de liaison 18 et les paliers à roulements 15 du rotor 12 sont précontraints de manière à ce que le rotor 12 soit totalement immobilisé lors de la mise en position verticale de l'ensemble propulsif 2. Le contre-écrou 58 du second ensemble 17 est ensuite serré sur la première portion filetée 49 afin de verrouiller l'outil avant 4, le contre-écrou 58 étant en appui axial avec le premier écrou 48 à l'issue du serrage.

Avantageusement, le second écrou 78 est serré selon un paramètre de serrage prédéterminé, tel que le couple, de manière à appliquer la précontrainte souhaitée (par exemple une force de 50 Newtons) au niveau des paliers à roulement 15 du rotor 12.

L'étape de montage de l'outil arrière 6 comprend les sous-étapes suivantes :
- une sous-étape de liaison des seconds moyens d'attache 11 du second système de levage 10 à la seconde interface de liaison 23 de l'outil arrière 6 ;
- une sous-étape de mise en position et maintien en position de l'outil arrière 6 par rapport au carter arrière 7.

Selon le mode de réalisation illustré sur les figures, lors de la première sous-étape, l'outil arrière 6 se trouve par exemple stocké dans un rack de rangement, un opérateur insère le second crochet de levage 35 du second système de levage 10 dans le second anneau de levage 36 de l'outil arrière 6.

Lors de la seconde sous-étape, l'outil arrière 6 est déplacé depuis le rack de rangement jusqu'au carter arrière 7 de l'ensemble propulsif 2 en actionnant le second dispositif de levage 33. Le cadre 19 est ensuite mis en position et maintenu en position par rapport au carter arrière 7.

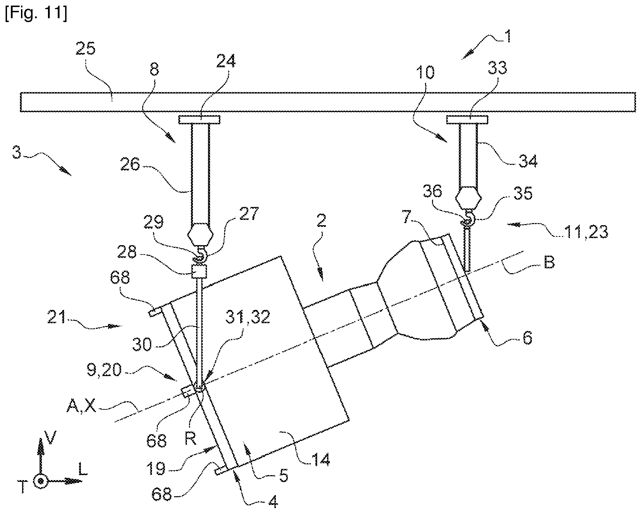

Le placement de l'ensemble propulsif 2 d'une position horizontale à une position verticale au moyen de l'installation 1, l'outillage 3 de l'installation 1 étant monté sur l'ensemble propulsif 2, l'ensemble propulsif 2 étant disposé dans un dispositif de stockage 82 en position horizontale, les premiers et seconds moyens d'attache 9, 11 étant respectivement liés aux première et seconde interfaces de liaison, le procédé de placement comprenant les étapes suivantes :
- une étape de dépose de l'ensemble propulsif 2 de sorte que l'ensemble propulsif 2 soit uniquement supporté par les outils avant et arrière ;
- une étape de manœuvre des premier et second systèmes de levage 8, 10 de manière à faire basculer l'ensemble propulsif 2 autour de l'axe de rotation R de sorte à abaisser l'outil avant 4 et élever l'outil arrière 6 (figure 11);
- une étape de pose de l'ensemble propulsif 2 en position vertical sur les moyens d'appui au sol 21 de l'outil avant 4 de sorte que l'axe X de l'ensemble propulsif 2 soit vertical (figure 12).

Selon le mode de réalisation illustré sur les figures, lors de l'étape de dépose, l'ensemble propulsif 2 est levé via les premier et second dispositifs de levage 24, 33 contrôlés de manière synchronisée, l'ensemble propulsif 2 étant alors uniquement supporté par les outils avant et arrière.

Lors de l'étape de manœuvre, les élingues 30 et les câbles 26, 34 des premier et second dispositifs de levage 24, 33 doivent être en permanence tendus afin que les efforts soient repris de manière homogène par l'ensemble propulsif 2 au niveau des outils avant et arrière. De manière générale, l'outil avant 4 est abaissé, l'outil arrière 6 est élevé et déplacé longitudinalement en direction de l'outil avant 4. Tel qu'illustré sur la figure 11, l'ensemble propulsif 2 bascule d'une position horizontale à une position verticale dans un sens antihoraire.

Lors de l'étape de pose, l'ensemble propulsif 2 est posé à plat en position verticale sur les pieds 68 de l'outil avant 4.

## Revendications

1. Outillage (3) pour placer un ensemble propulsif (2) d'une position horizontale à une position verticale, ledit ensemble propulsif (2) étant défini par un premier axe (X) et comprenant au moins un module de soufflante (5) à une extrémité avant dudit ensemble propulsif (2) et un carter arrière (7) à une extrémité arrière opposée à ladite extrémité avant, ledit module de soufflante (5) comprenant un rotor (12) portant des pales (13) et un carter avant (14) entourant lesdites pales (13), ledit outillage (3) comprenant :
- un outil avant (4) défini par un second axe (A) et comportant :
• un premier ensemble (16) comprenant un cadre (19) configuré pour être positionné et maintenu par rapport audit carter avant (14) dudit module de soufflante (5), ledit cadre (19) comprenant une première interface de liaison (20) configurée pour être liée avec des premiers moyens d'attache (9) d'un premier système de levage (8) de sorte que ledit cadre (19) soit mobile en rotation autour d'un axe de rotation (R) par rapport auxdits premiers moyens d'attache (9) ;
• un second ensemble (17) comprenant un arbre (22) configuré pour être positionné et maintenu par rapport audit rotor (12) dudit module de soufflante (5) ;
• un organe de liaison (18) entre ledit premier ensemble (16) et ledit second ensemble (17), ledit organe de liaison (18) étant configuré pour être d'une part positionné et maintenu par rapport audit premier ensemble (16), et d'autre part positionné et maintenu par rapport audit second ensemble (17) ;
- un outil arrière (6) défini par un troisième axe (B) et configuré pour être positionné et maintenu par rapport audit carter arrière (7), ledit outil arrière (6) comprenant une seconde interface de liaison (23) configurée pour être liée avec des seconds moyens d'attache (11) d'un second système de levage (10).

2. Outillage (3) selon la revendication 1, **caractérisé en ce que** le premier ensemble (16) comprend deux tourillons (32) opposés et alignés selon ledit axe de rotation (R), lesdits deux tourillons (32) définissant ladite première interface de liaison (20), chaque tourillon (32) étant configuré pour être lié auxdits premiers moyens d'attache (9) dudit premier système de levage (8).

3. Outillage (3) selon l'une des revendications précédentes, **caractérisé en ce que** ledit arbre (22) est configuré pour être logé au moins en partie dans un logement (37) interne dudit rotor (12), ledit second ensemble (17) comprenant :
• une première surface de centrage (38) avant dudit arbre (22) configurée pour s'insérer dans un premier alésage (39) avant dudit logement (37) ;
• une seconde surface de centrage (40) arrière dudit arbre (22) configurée pour s'insérer dans un second alésage (41) arrière dudit logement (37) ;
• une première surface d'appui (42) avant dudit arbre (22) configurée pour venir en appui axial avec une première face (43) arrière d'une butée (44) dudit logement (37) ;
• une seconde surface d'appui (46) arrière d'une bague (45) rapportée sur ledit arbre (22), ladite seconde surface d'appui (46) étant configurée pour venir en appui axial avec une seconde face (47) avant dudit rotor (12) ;
• un premier écrou (48) rapporté sur ledit arbre (22), ledit premier écrou (48) comprenant une portion taraudée coopérant avec une première portion filetée (49) dudit arbre (22) de sorte que le serrage dudit premier écrou (48) maintienne le contact non seulement entre ladite première surface d'appui (42) et ladite première face (43) mais également entre ladite seconde surface d'appui (46) et ladite seconde face (47).

4. Outillage (3) selon la revendication 3, **caractérisé en ce que** la première surface d'appui (42) est définie par au moins deux facettes (52) coplanaires, lesdites facettes (52) étant perpendiculaires au second axe (A) et espacées circonférentiellement, chacune desdites facettes (52) étant formée sur une dent (53) en saillie radiale depuis ledit arbre (22), lesdites dents (53) étant aptes à traverser axialement ladite butée (44) via des ouvertures (54) de forme complémentaire pratiquées dans ladite butée (44).

5. Outillage (3) selon la revendication 4, **caractérisé en ce que** l'espace circonférentiel entre lesdites au moins deux facettes (52) défini un passage (55) axial, ladite bague (45) comprenant une languette (56) en saillie axiale configurée pour traverser simultanément une des ouvertures (54) et ledit passage (55) de sorte à lier en rotation l'arbre (22) avec ledit rotor (12) et garantir le contact entre ladite première surface d'appui (42) et ladite première face (43).

6. Outillage (3) selon l'une des revendications 3 à 5, **caractérisé en ce que** ladite première surface de centrage (38) avant est configurée pour s'insérer dans ledit premier alésage (39) avant pratiqué dans ladite butée (44).

7. Outillage (3) selon l'une des revendications précédentes, **caractérisé en ce que** le premier ensemble (16) comprend :
• un troisième alésage (59) borgne dudit cadre (19) configuré pour recevoir une troisième surface de centrage (60) d'une collerette (61) dudit carter avant (14) ;
• une troisième surface d'appui (62) arrière dudit cadre (19) configurée pour venir en appui axial avec une troisième face (63) avant de ladite collerette (61) dudit carter avant (14) ;
• au moins un premier élément de maintien (64) configuré pour maintenir de façon réversible ladite collerette (61) audit cadre (19) lorsque ledit troisième alésage (59) reçoit ladite troisième surface de centrage (60) et ladite troisième surface d'appui (62) est en appui avec ladite troisième face (63).

8. Outillage (3) selon l'une des revendications précédentes, **caractérisé en ce que** ledit organe de liaison (18) comprend :
• une quatrième surface de centrage (69) insérée dans un quatrième alésage (70) dudit cadre (19) ;
• une quatrième surface d'appui (71) arrière en appui axial avec une quatrième face (72) avant dudit cadre (19) ;
• au moins un second élément de maintien (73) configuré pour maintenir de façon réversible ledit organe de liaison (18) audit cadre (19) lorsque ladite quatrième surface de centrage (69) est insérée dans ledit quatrième alésage (70) et ladite quatrième surface d'appui (71) est en appui avec ladite quatrième face (72).

9. Outillage (3) selon l'une des revendications 3 à 6, **caractérisé en ce que** ledit second ensemble (17) comprend une cinquième surface de centrage (76) dudit arbre (22) placée en avant dudit premier écrou (48), ladite cinquième surface de centrage (76) étant insérée dans un cinquième alésage (77) dudit organe de liaison (18), ledit second ensemble (17) comprenant un second écrou (78) rapporté sur ledit arbre (22), ledit second écrou (78) comprenant une portion taraudée coopérant avec une seconde portion filetée (79) dudit arbre (22) de sorte que le serrage dudit second écrou (78) maintienne ledit second ensemble (17) par rapport audit premier ensemble (16).

10. Outillage (3) selon l'une des revendications 3 à 6, **caractérisé en ce que** le second ensemble (17) comprend un contre-écrou (58) placé entre ledit premier écrou (48) et ledit organe de liaison (18), ledit contre-écrou (58) comprenant une portion taraudée coopérant avec ladite première portion filetée (49) dudit arbre (22).

11. Installation (1) pour placer un ensemble propulsif (2) défini par un premier axe (X) d'une position horizontale à une position verticale, ladite installation (1) comprenant :
• un outillage (3) selon l'une des revendications 1 à 10 ;
• un premier système de levage (8) comprenant des premiers moyens d'attache (9) audit premier ensemble (16), ledit premier système de levage (8) étant configuré pour déplacer horizontalement lesdits premiers moyens d'attache (9) suivant un axe longitudinal (L) et déplacer verticalement lesdits premiers moyens d'attache (9), ledit axe longitudinal (L) étant parallèle au premier axe (X) de l'ensemble propulsif (2) lorsqu'il est en position horizontale ;
• un second système de levage (10) comprenant des seconds moyens d'attache (11) audit outil arrière (6), ledit second système de levage (10) étant configuré pour déplacer horizontalement lesdits seconds moyens d'attache (11) suivant ledit axe longitudinal (L) et déplacer verticalement lesdits seconds moyens d'attache (11).

12. Procédé de montage de l'outillage (3) d'une installation (1) selon la revendication 11 sur un ensemble propulsif (2) défini par un premier axe (X) et comprenant au moins un module de soufflante (5) à une extrémité avant dudit ensemble propulsif (2) et un carter arrière (7) à une extrémité arrière opposée à ladite extrémité avant, ledit module de soufflante (5) comprenant un rotor (12) portant des pales (13) et un carter avant (14) entourant lesdites pales (13), ledit procédé de montage comprenant les étapes suivantes :
• une étape de montage de l'outil avant (4) sur ledit module de soufflante (5) de sorte que ledit axe de rotation (R) soit sensiblement horizontal ;
• une étape de montage de l'outil arrière (6) sur ledit carter arrière (7).

13. Procédé de montage selon la revendication 12, **caractérisé en ce que** l'étape de montage de l'outil avant (4) comprend les sous-étapes suivantes :
• une sous-étape de liaison des premiers moyens d'attache (9) dudit premier système de levage (8) à ladite première interface de liaison (20) dudit cadre (19) ;
• une sous-étape de mise en position et maintien en position du cadre (19) par rapport audit carter avant (14) dudit module de soufflante (5) ;
• une sous-étape de mise en position et maintien en position dudit arbre (22) par rapport audit rotor (12) dudit module de soufflante (5) ;
• une sous-étape de mise en position dudit organe de liaison (18) par rapport auxdits premier et second ensembles (16, 17) ;
• une sous-étape de maintien en position dudit organe de liaison (18) par rapport audit premier ensemble (16) ;
• une sous-étape de maintien en position dudit organe de liaison (18) rapport audit second ensemble (17).

14. Procédé de montage selon l'une des revendications 12 ou 13, **caractérisé en ce que** l'étape de montage de l'outil arrière (6) comprend les sous-étapes suivantes ;
• une sous-étape de liaison des seconds moyens d'attache (11) dudit second système de levage (10) à ladite seconde interface de liaison (23) dudit outil arrière (6) ;
• une sous-étape de mise en position et maintien en position dudit outil arrière (6) par rapport audit carter arrière (7).

15. Procédé de placement d'un ensemble propulsif (2) d'une position horizontale à une position verticale au moyen d'une installation (1) selon la revendication 11, ledit outillage (3) de ladite installation (2) étant monté sur ledit ensemble propulsif (2) selon l'une des revendications 12 à 14, ledit ensemble propulsif (2) étant disposé dans un dispositif de stockage (82) en position horizontale, lesdits premiers et seconds moyens d'attache (9, 11) étant respectivement liés auxdits première et seconde interfaces de liaison, ledit procédé de placement comprenant les étapes suivantes :
• une étape de dépose de l'ensemble propulsif (2) de sorte que ledit ensemble propulsif (2) soit uniquement supporté par lesdits outils avant et arrière ;
• une étape de manœuvre desdits premier et second systèmes de levage (8, 10) de manière à faire basculer l'ensemble propulsif (2) autour de l'axe de rotation (R) de sorte à abaisser ledit outil avant (4) et élever ledit outil arrière (6);
• une étape de pose de l'ensemble propulsif (2) en position verticale sur des moyens d'appui au sol (21) dudit outil avant (4) de sorte que ledit premier axe (X) dudit ensemble propulsif (2) soit vertical.

## Patentansprüche

1. Werkzeugausstattung (3) zum Umstellen einer Antriebseinheit (2) von einer horizontalen Position in eine vertikale Position, wobei die Antriebseinheit (2) durch eine erste Achse (X) definiert ist und an einem vorderen Ende der Antriebseinheit (2) mindestens ein Bläsermodul (5) und an einem hinteren Ende, das dem vorderen Ende gegenüberliegt, ein hinteres Gehäuse (7) umfasst, wobei das Bläsermodul (5) einen Rotor (12), der Schaufeln (13) trägt, und ein vorderes Gehäuse (14), das die Schaufeln (13) umgibt, umfasst, wobei die Werkzeugausstattung (3) umfasst:
- ein vorderes Werkzeug (4), das durch eine zweite Achse (A) definiert ist und umfasst:
• eine erste Anordnung (16), umfassend einen Rahmen (19), der konfiguriert ist, um in Bezug auf das vordere Gehäuse (14) des Bläsermoduls (5) positioniert und gehalten zu werden, wobei der Rahmen (19) eine erste Verbindungsschnittstelle (20) umfasst, die konfiguriert ist, um mit ersten Befestigungsmitteln (9) eines ersten Hebesystems (8) derart verbunden zu werden, dass der Rahmen (19) in Bezug auf die ersten Befestigungsmittel (9) um eine Drehachse (R) herum drehbeweglich ist;
• eine zweite Anordnung (17), umfassend eine Welle (22), die konfiguriert ist, um in Bezug auf den Rotor (12) des Bläsermoduls (5) positioniert und gehalten zu werden;
• ein Verbindungsorgan (18) zwischen der ersten Anordnung (16) und der zweiten Anordnung (17), wobei das Verbindungsorgan (18) konfiguriert ist, um einerseits in Bezug auf die erste Anordnung (16) positioniert und gehalten zu werden und andererseits in Bezug auf die zweite Anordnung (17) positioniert und gehalten zu werden;
- ein hinteres Werkzeug (6), das durch eine dritte Achse (B) definiert ist und konfiguriert ist, um in Bezug auf das hintere Gehäuse (7) positioniert und gehalten zu werden, wobei das hintere Werkzeug (6) eine zweite Verbindungsschnittstelle (23) umfasst, die konfiguriert ist, um mit zweiten Befestigungsmitteln (11) eines zweiten Hebesystems (10) verbunden zu werden.

2. Werkzeugausstattung (3) nach Anspruch 1, **dadurch gekennzeichnet, dass** die erste Anordnung (16) zwei gegenüberliegende und in der Drehachse (R) ausgerichtete Zapfen (32) umfasst, wobei die zwei Zapfen (32) die erste Verbindungsschnittstelle (20) definieren, wobei jeder Zapfen (32) konfiguriert ist, um mit den ersten Befestigungsmitteln (9) des ersten Hebesystems (8) verbunden zu werden.

3. Werkzeugausstattung (3) nach einem der vorstehenden Ansprüche, **dadurch gekennzeichnet, dass** die Welle (22) konfiguriert ist, um mindestens teilweise in einer inneren Aufnahme (37) des Rotors (12) aufgenommen zu werden, wobei die zweite Anordnung (17) umfasst:
• eine vordere erste Zentrierungsfläche (38) der Welle (22), die konfiguriert ist, um in einer vorderen ersten Bohrung (39) der Aufnahme (37) eingesetzt zu werden;
• eine hintere zweite Zentrierungsfläche (40) der Welle (22), die konfiguriert ist, um in einer hinteren zweiten Bohrung (41) der Aufnahme (37) eingesetzt zu werden;
• eine vordere erste Auflagefläche (42) der Welle (22), die konfiguriert ist, um axial zu einer hinteren ersten Seite (43) eines Anschlags (44) der Aufnahme (37) aufzuliegen;
• eine hintere zweite Auflagefläche (46) eines an der Welle (22) angebrachten Rings (45), wobei die zweite Auflagefläche (46) konfiguriert ist, um axial zu einer vorderen zweiten Seite (47) des Rotors (12) aufzuliegen;
• eine erste Schraubenmutter (48), die an der Welle (22) angebracht ist, wobei die erste Schraubenmutter (48) einen Innengewinde geschnittenen Abschnitt umfasst, der mit einem gewundenen ersten Abschnitt (49) der Welle (22) derart zusammenwirkt, dass das Festziehen der ersten Schraubenmutter (48) den Kontakt nicht nur zwischen der ersten Auflagefläche (42) und der ersten Seite (43), sondern auch zwischen der zweiten Auflagefläche (46) und der zweiten Seite (47) hält.

4. Werkzeugausstattung (3) nach Anspruch 3, **dadurch gekennzeichnet, dass** die erste Auflagefläche (42) durch mindestens zwei koplanare Facetten (52) definiert ist, wobei die Facetten (52) senkrecht zur zweiten Achse (A) sind und umfänglich beabstandet sind, wobei jede der Facetten (52) auf einem Zahn (53) in radialem Vorsprung von der Welle (22) gebildet ist, wobei die Zähne (53) imstande sind, den Anschlag (44) über komplementärförmige Öffnungen (54), die im Anschlag (44) gefertigt sind, axial zu durchqueren.

5. Werkzeugausstattung (3) nach Anspruch 4, **dadurch gekennzeichnet, dass** der umfängliche Raum zwischen den mindestens zwei Facetten (52) einen axialen Durchgang (55) definiert, wobei der Ring (45) eine Lasche (56) in axialem Vorsprung umfasst, die konfiguriert ist, um gleichzeitig eine der Öffnungen (54) und den Durchgang (55) derart zu durchqueren, dass die Welle (22) drehend mit dem Rotor (12) verbunden wird und der Kontakt zwischen der ersten Auflagefläche (42) und der ersten Seite (43) gewährleistet ist.

6. Werkzeugausstattung (3) nach einem der Ansprüche 3 bis 5, **dadurch gekennzeichnet, dass** die vordere erste Zentrierungsfläche (38) konfiguriert ist, um in die vordere erste Bohrung (39) eingesetzt zu werden, die im Anschlag (44) gefertigt ist.

7. Werkzeugausstattung (3) nach einem der vorstehenden Ansprüche, **dadurch gekennzeichnet, dass** die erste Anordnung (16) umfasst:
• eine sacklochförmige dritte Bohrung (59) des Rahmens (19), die konfiguriert ist, um eine dritte Zentrierungsfläche (60) eines Kragens (61) des vorderen Gehäuses (14) zu empfangen;
• eine hintere dritte Auflagefläche (62) des Rahmens (19), die konfiguriert ist, um axial zu einer vorderen dritten Seite (63) des Kragens (61) des vorderen Gehäuses (14) aufzuliegen;
• mindestens ein erstes Halteelement (64), das konfiguriert ist, um den Kragen (61) auf umkehrbare Weise am Rahmen (19) zu halten, wenn die dritte Bohrung (59) die dritte Zentrierungsfläche (60) empfängt und die dritte Auflagefläche (62) an der dritten Seite (63) aufliegt.

8. Werkzeugausstattung (3) nach einem der vorstehenden Ansprüche, **dadurch gekennzeichnet, dass** das Verbindungsorgan (18) umfasst:
• eine vierte Zentrierungsfläche (69), die in einer vierten Bohrung (70) des Rahmens (19) eingesetzt ist;
• eine hintere vierte Auflagefläche (71), die axial zu einer vorderen vierten Seite (72) des Rahmens (19) aufliegt;
• mindestens ein zweites Halteelement (73), das konfiguriert ist, um das Verbindungsorgan (18) auf umkehrbare Weise am Rahmen (19) zu halten, wenn die vierte Zentrierungsfläche (69) in der vierten Bohrung (70) eingesetzt ist und die vierte Auflagefläche (71) an der vierten Seite (72) aufliegt.

9. Werkzeugausstattung (3) nach einem der Ansprüche 3 bis 6, **dadurch gekennzeichnet, dass** die zweite Anordnung (17) eine fünfte Zentrierungsfläche (76) der Welle (22) umfasst, die vor der ersten Schraubenmutter (48) platziert ist, wobei die fünfte Zentrierungsfläche (76) in einer fünften Bohrung (77) des Verbindungsorgans (18) eingesetzt ist, wobei die zweite Anordnung (17) eine zweite Schraubenmutter (78) umfasst, die an der Welle (22) angebracht ist, wobei die zweite Schraubenmutter (78) einen Innengewinde geschnittenen Abschnitt umfasst, der mit einem gewundenen zweiten Abschnitt (79) der Welle (22) derart zusammenwirkt, dass das Festziehen der zweiten Schraubenmutter (78) die zweite Anordnung (17) in Bezug auf die erste Anordnung (16) hält.

10. Werkzeugausstattung (3) nach einem der Ansprüche 3 bis 6, **dadurch gekennzeichnet, dass** die zweite Anordnung (17) eine Gegenmutter (58) umfasst, die zwischen der ersten Schraubenmutter (48) und dem Verbindungsorgan (18) platziert ist, wobei die Gegenmutter (58) einen Innengewinde geschnittenen Abschnitt umfasst, der mit dem gewundenen ersten Abschnitt (49) der Welle (22) zusammenwirkt.

11. Anlage (1) zum Umstellen einer Antriebseinheit (2), die durch eine erste Achse (X) definiert ist, von einer horizontalen Position in eine vertikale Position, wobei die Anlage (1) umfasst:
• eine Werkzeugausstattung (3) nach einem der Ansprüche 1 bis 10;
• ein erstes Hebesystem (8), umfassend erste Befestigungsmittel (9) an die erste Anordnung (16), wobei das erste Hebesystem (8) konfiguriert ist, um die ersten Befestigungsmittel (9) entlang einer Längsachse (L) horizontal zu verschieben und die ersten Befestigungsmittel (9) vertikal zu verschieben, wobei die Längsachse (L) parallel zur ersten Achse (X) der Antriebseinheit (2) ist, wenn sie sich in einer horizontalen Position befindet;
• ein zweites Hebesystem (10), umfassend zweite Befestigungsmittel (11) an das hintere Werkzeug (6), wobei das zweite Hebesystem (10) konfiguriert ist, um die zweiten Befestigungsmittel (11) entlang der Längsachse (L) horizontal zu verschieben und die zweiten Befestigungsmittel (11) vertikal zu verschieben.

12. Verfahren zum Montieren der Werkzeugausstattung (3) einer Anlage (1) nach Anspruch 11 auf einer Antriebseinheit (2), die durch eine erste Achse (X) definiert ist und an einem vorderen Ende der Antriebseinheit (2) mindestens ein Bläsermodul (5) und an einem hinteren Ende, das dem vorderen Ende gegenüberliegt, ein hinteres Gehäuse (7) umfasst, wobei das Bläsermodul (5) einen Rotor (12), der Schaufeln (13) trägt, und ein vorderes Gehäuse (14), das die Schaufeln (13) umgibt, umfasst, wobei das Verfahren zum Montieren die folgenden Schritte umfasst:
• einen Schritt des Montierens des vorderen Werkzeugs (4) auf dem Bläsermodul (5) derart, dass die Drehachse (R) im Wesentlichen horizontal ist;
• einen Schritt des Montierens des hinteren Werkzeugs (6) auf dem hinteren Gehäuse (7).

13. Verfahren zum Montieren nach Anspruch 12, **dadurch gekennzeichnet, dass** der Schritt des Montierens des vorderen Werkzeugs (4) die folgenden Teilschritte umfasst:
• einen Teilschritt des Verbindens der ersten Befestigungsmittel (9) des ersten Hebesystems (8) mit der ersten Verbindungsschnittstelle (20) der Welle (19);
• einen Teilschritt des Positionierens und des Haltens des Rahmens (19) in Position in Bezug auf das vordere Gehäuse (14) des Bläsermoduls (5);
• einen Teilschritt des Positionierens und des Haltens der Welle (22) in Position in Bezug auf den Rotor (12) des Bläsermoduls (5);
• einen Teilschritt des Positionierens des Verbindungsorgans (18) in Bezug auf die erste und die zweite Anordnung (16, 17);
• einen Teilschritt des Haltens des Verbindungsorgans (18) in Position in Bezug auf die erste Anordnung (16);
• einen Teilschritt des Haltens des Verbindungsorgans (18) in Position in Bezug auf die zweite Anordnung (17).

14. Verfahren zum Montieren nach einem der Ansprüche 12 oder 13, **dadurch gekennzeichnet, dass** der Schritt des Montierens des hinteren Werkzeugs (6) die folgenden Teilschritte umfasst:
• einen Teilschritt des Verbindens der zweiten Befestigungsmittel (11) des zweiten Hebesystems (10) mit der zweiten Verbindungsschnittstelle (23) des hinteren Werkzeugs (6);
• einen Teilschritt des Positionierens und des Haltens des hinteren Werkzeugs (6) in Position in Bezug auf das hintere Gehäuse (7).

15. Verfahren zum Platzieren einer Antriebseinheit (2) von einer horizontalen Position in eine vertikale Position mittels einer Anlage (1) nach Anspruch 11, wobei die Werkzeugausstattung (3) der Anlage (2) auf der Antriebseinheit (2) nach einem Ansprüche 12 bis 14 platziert wird, wobei die Antriebseinheit (2) in einer Lagervorrichtung (82) in einer horizontalen Position angeordnet ist, wobei die ersten und die zweiten Befestigungsmittel (9, 11) mit der ersten bzw. der zweiten Verbindungsschnittstelle verbunden werden, wobei das Verfahren zum Platzieren die folgenden Schritte umfasst:
• einen Schritt des Anordnens der Antriebseinheit (2) derart, dass die Antriebseinheit (2) nur von dem vorderen und dem hinteren Werkzeug gestützt wird;
• einen Schritt des Manövrierens des ersten und des zweiten Hebesystems (8, 10) auf solche Weise, dass die Antriebseinheit (2) derart um die Drehachse (R) herum gekippt wird, dass das vordere Werkzeug (4) abgesenkt wird und das hintere Werkzeug (6) angehoben wird;
• einen Schritt des Anordnens der Antriebseinheit (2) in einer vertikalen Position auf Befestigungsmitteln auf dem Boden (21) des vorderen Werkzeugs (4) derart, dass die erste Achse (X) der Antriebseinheit (2) vertikal ist.

## Claims

1. A tooling (3) for placing a propulsive assembly (2) from a horizontal position to a vertical position, said propulsive assembly (2) being defined by a first axis (X) and comprising at least one fan module (5) at a front end of said propulsive assembly (2) and a rear casing (7) at a rear end opposite said front end, said fan module (5) comprising a rotor (12) carrying blades (13) and a front casing (14) surrounding said blades (13), said tooling (3) comprising:
- a front tool (4) defined by a second axis (A) and comprising:
• a first assembly (16) comprising a frame (19) configured to be positioned and held with respect to said front casing (14) of said fan module (5), said frame (19) comprising a first connection interface (20) configured to be connected to first attaching means (9) of a first lifting system (8) so that said frame (19) is movable about an axis of rotation (R) with respect to said first attaching means (9);
• a second assembly (17) comprising a shaft (22) configured to be positioned and held with respect to said rotor (12) of said fan module (5);
• a member (18) for connection between said first assembly (16) and said second assembly (17), said connection member (18) being configured to be on the one hand positioned and held with respect to said first assembly (16), and on the other hand positioned and held with respect to said second assembly (17);
- a rear tool (6) defined by a third axis (B) and configured to be positioned and held with respect to said rear casing (7), said rear tool (6) comprising a second connection interface (23) configured to be connected to second attaching means (11) of a second lifting system (10).

2. The tooling (3) according to claim 1, **characterized in that** the first assembly (16) comprises two trunnions (32) opposite and aligned according to said axis of rotation (R), said two trunnions (32) defining said first connection interface (20), each trunnion (32) being configured to be connected to said first attaching means (9) of said first lifting system (8).

3. The tooling (3) according to one of the preceding claims, **characterised in that** said shaft (22) is configured to be housed at least in part in an internal housing (37) of said rotor (12), said second assembly (17) comprising:
• a first front centering surface (38) of said shaft (22) configured to be inserted in a first front bore (39) of said housing (37);
• a second rear centering surface (40) of said shaft (22) configured to be inserted in a second rear bore (41) of said housing (37);
• a first front bearing surface (42) of said shaft (22) configured to come into axial bearing with a first rear face (43) of an abutment (44) of said housing (37);
• a second rear bearing surface (46) of a ring (45) added on to said shaft (22), said second bearing surface (46) being configured to come into axial bearing with a second front face (47) of said rotor (12);
• a first nut (48) added on to said shaft (22), said first nut (48) comprising a tapped portion cooperating with a first threaded portion (49) of said shaft (22) so that tightening of said first nut (48) holds contact not only between said first bearing surface (42) and said first face (43) but also between said second bearing surface (46) and said second face (47).

4. The tooling (3) according to claim 3, **characterized in that** the first bearing surface (42) is defined by at least two coplanar facets (52), said facets (52) being perpendicular to the second axis (A) and circumferentially spaced, each of said facets (52) being formed on a tooth (53) projecting radially from said shaft (22), said teeth (53) being able to pass axially through said abutment (44) via complementarily shaped apertures (54) made in said abutment (44).

5. The tooling (3) according to claim 4, **characterised in that** the circumferential space between said at least two facets (52) defines an axial passage (55), said ring (45) comprising an axially projecting lug (56) configured to pass simultaneously through one of the apertures (54) and said passage (55) so as to rotatably connect the shaft (22) with said rotor (12) and ensure the contact between said first bearing surface (42) and said first face (43).

6. The tooling (3) according to one of claims 3 to 5, **characterised in that** said first front centering surface (38) is configured to be inserted in said first front bore (39) made in said abutment (44).

7. The tooling (3) according to one of the preceding claims, **characterised in that** the first assembly (16) comprises:
• a third blind bore (59) of said frame (19) configured to receive a third centering surface (60) of a collar (61) of said front casing (14);
• a third rear bearing surface (62) of said frame (19) configured to come into axial bearing with a third front face (63) of said collar (61) of said front casing (14);
• at least one first holding element (64) configured to reversibly hold said collar (61) to said frame (19) when said third bore (59) receives said third centering surface (60) and said third bearing surface (62) bears against said third face (63).

8. The tooling (3) according to one of the preceding claims, **characterised in that** said connection member (18) comprises:
• a fourth centering surface (69) inserted in a fourth bore (70) of said frame (19);
• a fourth rear bearing surface (71) in axial bearing against a fourth front face (72) of said frame (19);
• at least one second holding element (73) configured to reversibly hold said connection member (18) to said frame (19) when said fourth centering surface (69) is inserted in said fourth bore (70) and said fourth bearing surface (71) bears against said fourth face (72).

9. The tooling (3) according to one of claims 3 to 6, **characterized in that** said second assembly (17) comprises a fifth centering surface (76) of said shaft (22) placed in front of said first nut (48), said fifth centering surface (76) being inserted in a fifth bore (77) of said connection member (18), said second assembly (17) comprising a second nut (78) added on to said shaft (22), said second nut (78) comprising a tapped portion cooperating with a second threaded portion (79) of said shaft (22) so that tightening of said second nut (78) holds said second assembly (17) relative to said first assembly (16).

10. The tooling (3) according to one of claims 3 to 6, **characterized in that** the second assembly (17) comprises a locknut (58) placed between said first nut (48) and said connection member (18), said locknut (58) comprising a tapped portion cooperating with said first threaded portion (49) of said shaft (22).

11. Installation (1) for placing a propulsive assembly (2) defined by a first axis (X) from a horizontal position to a vertical position, said installation (1) comprising:
• a tooling (3) according to one of the claims 1 to 10;
• a first lifting system (8) comprising first means (9) for attaching to said first assembly (16), said first lifting system (8) being configured to horizontally move said first attaching means (9) along a longitudinal axis (L) and to vertically move said first attaching means (9), said longitudinal axis (L) being parallel to the first axis (X) of the propulsive assembly (2) when in a horizontal position;
• a second lifting system (10) comprising second means (11) for attaching to said rear tool (6), said second lifting system (10) being configured to horizontally move said second attaching means (11) along said longitudinal axis (L) and vertically move said second attaching means (11).

12. A method of mounting the tooling (3) of an installation (1) according to claim 11 on a propulsive assembly (2) defined by a first axis (X) and comprising at least one fan module (5) at a front end of said propulsive assembly (2) and a rear casing (7) at a rear end opposite said front end, said fan module (5) comprising a rotor (12) carrying blades (13) and a front casing (14) surrounding said blades (13), said mounting method comprising the following steps:
• a step of mounting the front tool (4) on said fan module (5) so that said axis of rotation (R) is substantially horizontal;
• a step of mounting the rear tool (6) on said rear casing (7).

13. The mounting method according to claim 12, **characterised in that** the step of mounting the front tool (4) comprises the following sub-steps:
• a sub-step of connecting the first attaching means (9) of said first lifting system (8) to said first connection interface (20) of said frame (19);
• a sub-step of positioning and holding the frame (19) in position with respect to said front casing (14) of said fan module (5);
• a sub-step of positioning and holding said shaft (22) in position with respect to said rotor (12) of said fan module (5);
• a sub-step of positioning said connection member (18) with respect to said first and second assemblies (16, 17);
• a sub-step of holding said connection member (18) in position with respect to said first assembly (16);
• a sub-step of holding in position said connection member (18) with respect to said second assembly (17).

14. The mounting method according to any one of claims 12 or 13, **characterized in that** the step of mounting the rear tool (6) comprises the following sub-steps:
• a sub-step of connecting the second attaching means (11) of said second lifting system (10) to said second connection interface (23) of said rear tool (6);
• a sub-step of positioning and holding in position said rear tool (6) with respect to said rear casing (7).

15. A method of placing a propulsive assembly (2) from a horizontal position to a vertical position by means of an installation (1) according to claim 11, said tooling (3) of said installation (2) being mounted on said propulsive assembly (2) according to one of claims 12 to 14, said propulsive assembly (2) being disposed in a storage device (82) in a horizontal position, said first and second attaching means (9, 11) being respectively connected to said first and second connection interfaces, said placing method comprising the following steps:
• a step of removing the propulsive assembly (2) so that said propulsive assembly (2) is only supported by said front and rear tools;
• a step of manoeuvring said first and second lifting systems (8, 10) so as to tilt the propulsive assembly (2) about the axis of rotation (R) so as to lower said front tool (4) and raise said rear tool (6);
• a step of placing the propulsive assembly (2) in a vertical position on ground bearing means (21) of said front tool (4) so that said first axis (X) of said propulsive assembly (2) is vertical.
